# EUROPÄISCHE PATENTSCHRIFT

(11) **EP 2 895 381 B1**
(45) Veröffentlichungstag und Bekanntmachung des Hinweises auf die Patenterteilung: **09.01.2019**
(21) Anmeldenummer: 13750722.4
(22) Anmeldetag: 22.08.2013
(51) Int. Cl.: B62D 25/02, B62D 29/00

(54) **KRAFTFAHRZEUGKAROSSERIE MIT EINER SEITENWAND UND VERFAHREN ZU DEREN HERSTELLUNG**
MOTOR VEHICLE BODYWORK COMPRISING A LATERAL WALL AND METHOD FOR THE PRODUCTION THEREOF
CARROSSERIE DE VÉHICULE AUTOMOBILE COMPRENANT UNE PAROI LATÉRALE ET SON PROCÉDÉ DE FABRICATION

(30) Priorität: 12.09.2012 DE 102012216100
(43) Veröffentlichungstag der Anmeldung: 22.07.2015
(73) Patentinhaber: Bayerische Motoren Werke Aktiengesellschaft, 80809 München (DE)
(72) Erfinder: BREM, Erich, 86415 Mering (DE); BEHRENDT, Franz-Peter, 80469 München (DE); BRAUCH, Michael, 85598 Baldham (DE); ULLRICH, Horst-Dieter, 82110 Germering (DE); KERSCHER, Martin, 84164 Dornwang (DE)
(86) Internationale Anmeldenummer: PCT/EP2013/067431
(87) Internationale Veröffentlichungsnummer: WO 2014/040832

(56) Entgegenhaltungen:
- EP-A2- 1 557 342
- DE-A1- 10 042 410
- DE-A1-102005 039 463
- DE-A1-102007 010 341
- DE-A1-102007 025 930

## Beschreibung

Die Erfindung betrifft eine Kraftfahrzeugkarosserie mit einer Seitenwand nach dem Oberbegriff des Patentanspruchs 1.

Aus der DE 100 42 410 A1 ist eine Kraftfahrzeugkarosserie mit einem Dachseitenrahmen bekannt, der eine Innenschale und eine Außenschale umfasst. Die Innenschale und die Außenschale sind über zwei Flansche miteinander verbunden und umschließen einen gemeinsamen Hohlraum. In dem Hohlraum ist zur Verstärkung des Dachseitenrahmens ein Rohr angeordnet.

Ferner ist aus der DE 10 2007 010 341 A1 bereits ein Bauteil einer Kraftfahrzeugkarosserie in Schalenbauweise mit einer Innenschale und einer Außenschale bekannt, wobei zwischen der Innen- und der Außenschale ein Strukturelement aus einem faserverstärkten Kunststoff angeordnet ist.

Ferner ist aus der DE 10 2005 039 463 A1 eine Seitenwand einer Kraftfahrzeug-karosserie bekannt. Die Seitenwand besteht in Schalenbauweise zumindest aus einer Seiteninnenwand und einer Seitenaußenwand. Die Seiteninnenwand ist aus mehreren Komponenten zusammengebaut. Eine dieser Komponenten ist ein Dachlängsträger, der aus wenigstens einem Hohlprofilkörper besteht.

Aufgabe der Erfindung ist es, ein Verfahren zur Schaffung einer Seitenwand in Schalenbauweise mit einem darin angeordneten Rohr zu schaffen.

Diese Aufgabe wird mit einem Verfahren zum Herstellen einer Kraftfahrzeugkarosserie mit einer Seitenwand mit den Merkmalen des Patentanspruchs 1 gelöst.

Erfindungsgemäß bildet eine Seitenwand in Schalenbauweise einer Kraftfahrzeugkarosserie zugleich einen Dachseitenrahmen. Eine Seitenwand im Sinne dieser Erfindung bildet zumindest im Bereich der Fahrgastzelle die seitliche Begrenzung der Fahrzeugkarosserie. Der Dachseitenrahmen bildet die seitliche Begrenzung des Fahrzeugdachs. Er bildet quasi den Übergang zwischen Fahrzeugdach und Seitenwand. Der Dachseitenrahmen besteht in Schalenbauweise aus einer Blechinnenschale und einer Blechaußenschale, die zugleich die Seitenwand bilden. In dem Hohlraum zwischen der Blechinnenschale und der Blechaußenschale im Bereich des Dachseitenrahmens ist zur Verstärkung ein Rohr angeordnet, das sich entlang der Längsrichtung des Dachseitenrahmens erstreckt. Ein Rohr weist bezogen auf sein Gewicht eine außerordentlich hohe Biegesteifigkeit auf. Im Dachseitenrahmen erhöht es dessen Steifigkeit maßgeblich. Das Rohr besteht aus einem faserverstärkten Kunststoff. Ein Rohr aus einem faserverstärkten Kunststoff ist kostengünstig in fast jeder gewünschten Form herstellbar. Im Vergleich zu einem Stahlrohr weist es eine etwas geringere Steifigkeit bei einem wesentlich geringeren Gewicht auf.

Das Rohr kann aus einem Glasfaser-verstärkten, einem Aramidfaser-verstärkten oder einem Kohlefaser-verstärkten Kunststoff bestehen. Glasfaser-verstärkte Kunststoffe sind ein kostengünstiger und dennoch sehr hochwertiger Faser-KunststoffVerbund. Verglichen mit Faser-Kunststoff-Verbunden aus anderen Verstärkungsfasern hat der glasfaserverstärkte Kunststoff ein relativ niedriges Elastizitätsmodul. Aramidfasern zeichnen sich durch eine sehr hohe Festigkeit, ein hohe Schlagzähigkeit, eine hohe Bruchdehnung sowie eine gute Schwingungsdämpfung aus. Allerdings sind sie sehr teuer in der Herstellung und kommen daher meist nur bei sehr hohen Beanspruchungen zum Einsatz. Kohlefasern werden vor allem verwendet, wenn hohe gewichtsspezifische Festigkeiten und Steifigkeit gefordert sind. Günstigerweise besteht das Rohr aus einem Kohlefaser-verstärkten Kunststoff, da im Karosseriebau stets sehr auf das Gesamtgewicht der Karosserie geachtet werden muss, um den Kraftstoffverbrauch möglichst gering zu halten, und eine bestmögliche Fahrdynamik zu gewährleisten.

Bevorzugt sind die Fasern des Rohres miteinander verflochten. Derartige Flechtprofile weisen definiert ausgerichtete und miteinander verflochtene Fasern auf. Dadurch weisen sie gegenüber herkömmlichen faserverstärkten Profilen eine wesentlich höhere Festigkeit und Steifigkeit auf. Die geflochtenen Profile können gegenüber herkömmlichen faserverstärkten Profilen entweder bei gleichem Gewicht eine deutlich höhere Steifigkeit und Festigkeit aufweisen, oder bei gleicher Steifigkeit und Festigkeit ein deutlich geringeres Gewicht. Zur Herstellung werden üblicherweise auf einen Kern die trockenen Kohlefaserbänder durch eine Radialflechtmaschine miteinander verflochten. Die so entstandene Preform (Vorform) wird im nachfolgenden Arbeitsschritt mit Harz infiltriert. Derartige geflochtene Profile erlauben eine deutlich freiere Formgebung, gleichzeitig sind weniger Fügestellen erforderlich. Durch den formschlüssigen Verbund sind die Profile zudem sehr stabil. Durch das spezielle Herstellungsverfahren lassen sich nicht nur die Wandstärken sehr leicht optimieren, indem man den Durchmesser des Kerns anpasst, auch deutlich komplexere Formen lassen sich so ohne Verkleben und mit deutlich weniger Verschnitt darstellen. Der geringere Materialeinsatz reduziert auch den erforderlichen Energieeinsatz.

Das Rohr erstreckt sich über die gesamte Längserstreckung des Dachseitenrahmens sowie in einen Abschnitt einer A-Säule hinein, wobei dieser Abschnitt der A-Säule ein integraler Bestandteil der Seitenwand ist. Die A-Säule einer Kraftfahrzeugkarosserie besteht aus zwei Abschnitten. Der obere Abschnitt oberhalb der Brüstungslinie erstreckt sich seitlich entlang einer Frontscheibe und geht oben in den Dachseitenrahmen über. Der obere Abschnitt endet unten etwa im Bereich eines unteren Windlaufs, an der die Frontscheibe mit ihrem unteren Randbereich angebracht ist. Das Rohr erstreckt sich zumindest in diesen oberen Abschnitt der A-Säule hinein. Bevorzugt erstreckt sich das Rohr über die gesamte Längserstreckung des oberen Abschnitts der A-Säule. Dieser obere Abschnitt der A-Säule wird in Schalenbauweise von der Blechinnenschale und der Blechaußenschale der Seitenwand gebildet. Der untere Abschnitt der A-Säule erstreckt sich vom Bereich des unteren Windlaufs aus nach unten bis zu einem Seitenschweller der Kraftfahrzeugkarosserie. Die Brüstungslinie wird gebildet entlang des unteren Randes der Seitenscheiben der seitlichen Fahrzeugtüren. Die Brüstungslinie verläuft annähernd auf der Höhe des unteren Windlaufs, an dem der untere Randbereich der Frontscheibe befestigt ist.

Wenn sich das Rohr nun in den oberen Abschnitt der A-Säule hinein erstreckt, wird nicht nur der eigentliche Dachseitenrahmen sondern auch dieser obere Abschnitt der A-Säule durch das Rohr maßgeblich versteift. Dies ist von besonderer Bedeutung bei hohen, auf das Fahrzeugdach wirkenden Belastungen, die dennoch möglichst keine Auswirkungen auf den Fahrgastraum haben sollten. Wenn nun das Rohr sich über den Dachseitenrahmen hinaus annähernd über die gesamte Längserstreckung des oberen Abschnitts der A-Säule erstreckt, können durch das Rohr auf das Fahrzeugdach wirkende Kräfte in die restliche Karosserie unterhalb der Türbrüstungslinie und in den unteren Abschnitt der A-Säule abgeleitet werden.

Das Rohr erstreckt sich in einen Abschnitt einer C-Säule hinein, wobei dieser Abschnitt der C-Säule ein integraler Bestandteil der Seitenwand ist. Die C-Säule einer Kraftfahrzeugkarosserie besteht aus zwei Abschnitten. Der obere Abschnitt oberhalb der Brüstungslinie erstreckt sich seitlich entlang einer Heckscheibe und geht oben in den Dachseitenrahmen über. Der obere Abschnitt endet unten etwa im Bereich eines unteren Querträgers, an dem die Heckscheibe mit ihrem unteren Randbereich angebracht ist. Das Rohr erstreckt sich zumindest in diesen oberen Abschnitt der C-Säule hinein. Bevorzugt erstreckt sich das Rohr über die gesamte Längserstreckung des oberen Abschnitts der C-Säule. Dieser obere Abschnitt der C-Säule wird in Schalenbauweise von der Blechinnenschale und der Blechaußenschale der Seitenwand gebildet. Auf diese Weise können auf das Fahrzeugdach einwirkende Kräfte über das Rohr im Dachseitenrahmen sowohl nach vorne über den oberen Abschnitt der A-Säule als auch nach hinten über den oberen Abschnitt der C-Säule in die restliche Karosserie abgeleitet werden, sodass eine unerwünschte Verformung des Fahrgastraums so gering wie möglich gehalten werden kann.

Der Dachseitenrahmen ist mit einer B-Säule der Kraftfahrzeugkarosserie verbunden. Die B-Säule erstreckt sich in Fahrzeuglängsrichtung gesehen im mittleren Bereich der Fahrgastzelle zwischen dem Dachseitenrahmen und dem Seitenschweller des Kraftfahrzeugs. Sie stützt also den Dachseitenrahmen am Seitenschweller in Fahrzeughöhenrichtung ab und kann entsprechend auch Kräfte in Fahrzeughöhenrichtung aufnehmen und übertragen. Derartige B-Säulen müssen zudem hohen Kräften bei einem Seitenaufprall standhalten können. Deshalb weisen sie üblicherweise ein Verstärkungsblech auf, das sich über die gesamte Höhe der B-Säule erstreckt. Das Rohr ist im Dachseitenrahmen mit dem Verstärkungsblech der B-Säule verbunden. Auf diese Weise können Kräfte direkt von dem Rohr in das Verstärkungsblech abgeleitet werden.

Die Verbindung zwischen dem Rohr und dem Verstärkungsblech kann nicht mit den im Karosseriebau üblichen Schweißtechniken hergestellt werden, da Rohre aus faserverstärkten Kunststoffen nicht mit Blechbauteilen verschweißbar sind. Daher ist das Rohr mit dem Verstärkungsblech bevorzugt verklebt und / oder vernietet. Sinnvollerweise stellt eine Verklebung die eigentliche Verbindung sicher. Unmittelbar nach dem Verkleben ist der Klebstoff aber noch nicht ausgehärtet, sodass die Verklebung noch nicht belastbar ist. Durch eine zusätzliche Nietverbindung muss während des Karosseriebaus nicht gewartet werden, bis der Klebstoff ausgehärtet ist, sondern der Karosseriebau kann ungehindert weiter gehen, da die Nietverbindung die dafür erforderliche Festigkeit der Verbindung gewährleistet.

Das Rohr ist mit dem Verstärkungsblech der B-Säule und mit der A-Säule und der C-Säule verbunden. Das Rohr besteht aus einem faserverstärkten Kunststoff, während der Dachseitenrahmen, die A-Säule und die C-Säule aus Blechschalen bestehen. Diese unterschiedlichen Werkstoffe weisen voneinander abweichende Längenausdehnungskoeffizienten auf. Dies stellt ein Problem für die Kraftfahrzeugkarosserie dar, da diese im Alltag sehr unterschiedlichen Temperaturen ausgesetzt ist. So muss die gesamte Karosserie im Sommer Temperaturen von mindestens 80°C beispielsweise in südlichen Ländern aushalten können. Zugleich muss sie aber auch starkem Frost im tiefsten Winter standhalten können, ohne dass es zu einer Beschädigung oder Deformation der Karosserie kommen darf. Durch die Verbindung des Rohres nur an drei Stellen mit der Seitenwand, die zugleich den oberen Teil der A-Säule, den Dachseitenrahmen und den oberen Teil der C-Säule bildet, kann sich der Klebstoff an dem vorderen und hinteren Anbindungsbereich jeweils bei Temperaturänderungen elastisch deformieren und so die unterschiedlichen Längenausdehnungen ausgleichen. Dadurch kann eine Beschädigung der Karosserie durch die unterschiedlichen Längenausdehnungen bei Temperaturveränderungen verhindert werden. Andererseits gewährleisten die drei Anbindungsbereiche eine ausreichende Kraftübertragung, sodass die Verstärkungswirkung des Rohres nicht eingeschränkt ist. Bevorzugt ist das Rohr mit der A-Säule und der C-Säule verklebt.

Verkleben ist eine bewährte Methode unterschiedliche Werkstoffe so miteinander zu verbinden, dass auch hohe Kräfte übertragen werden können. Eine auf diese Weise mit einem Rohr im Dachseitenrahmen, in der A-Säule und in der C-Säule versteifte Fahrzeugkarosserie ist einerseits sehr steif, andererseits relativ leicht, da die Verstärkung mit dem Rohr das Gewicht der Fahrzeugkarosserie nur moderat erhöht. Auch kann die Karosserie allen Temperaturschwankungen im Alltag trotz des Mischbaus aus unterschiedlichen Werkstoffen gut standhalten.

Unmittelbar nach dem Rohbau der Kraftfahrzeugkarosserie wird diese lackiert. Während des Lackierens bzw. beim anschließenden Trocknen des Lacks wird die Karosserie besonders hohen Temperaturen von 140°C und mehr ausgesetzt. Diese Temperaturen würde der Mischbau aus dem Rohr aus dem faserverstärkten Kunststoff und den Blechschalen nicht mehr ausgleichen können. Daher wird das Rohr zunächst mit dem Verstärkungsblech der B-Säule zu einer Vormontagegruppe verbunden. Diese Vormontagegruppe wird dann zwischen die Blechinnenschale und die Blechaußenschale eingebracht. Das Rohr ist also zunächst nur mit dem Verstärkungsblech der B-Säule verbunden. Diese Verbindung reicht aus, um das Rohr in seiner Sollposition zu halten. Die so komplettierte Karosserie wird nun lackiert. Erst nach dem Lackierprozess wird dann das Rohr mit der A-Säule und mit der C-Säule verklebt. Der Klebstoff wird dazu durch ein Loch in der Blechinnenschale in den Hohlraum zwischen der Blechinnenschale und der Blechaußenschale injiziert, in der sich auch das Rohr befindet. Dieses Verfahren ist bereits in der älteren Anmeldung DE 10 2011 088 286.3 beschrieben, deren Offenbarungsgehalt hiermit ausdrücklich in diese Anmeldung mit aufgenommen wird.

Um nun zu vermeiden, dass sich der Klebstoff beliebig in der A-Säule und in der C-Säule verteilen kann, wird bevorzugt beim Fügen der Einzelteile vor dem Lackieren der Karosserie auf das Rohr bzw. auf die Fügepartner beidseitig der beiden späteren Klebestellen mit der A-Säule und der C-Säule ringförmig Blähschaum aufgebracht. Der Blähschaum bläht sich beim Lackieren radial bis zur A-Säule bzw. C-Säule auf. Er bildet also quasi Schottwände in der A-Säule und der C-Säule jeweils beidseitig der beiden späteren Klebestellen. Andererseits behindert der Blähschaum aber nur minimal die unterschiedliche Wärmeausdehnung des Rohres relativ zu den beiden Blechschalen während des Lackierprozesses.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: eine Seitenansicht einer Kraftfahrzeugkarosserie, die mit einem Rohr im Dachseitenrahmen verstärkt ist,
- Fig. 2: eine perspektivische Ansicht einer Vormontagegruppe bestehend aus dem Rohr und einem Verstärkungsblech einer B-Säule,
- Fig. 3: eine vergrößerte Detailansicht der Verbindung zwischen dem Rohr und dem Verstärkungsblech der B-Säule und
- Fig. 4: einen Schnitt durch die Verbindung zwischen dem Rohr und dem Verstärkungsblech.

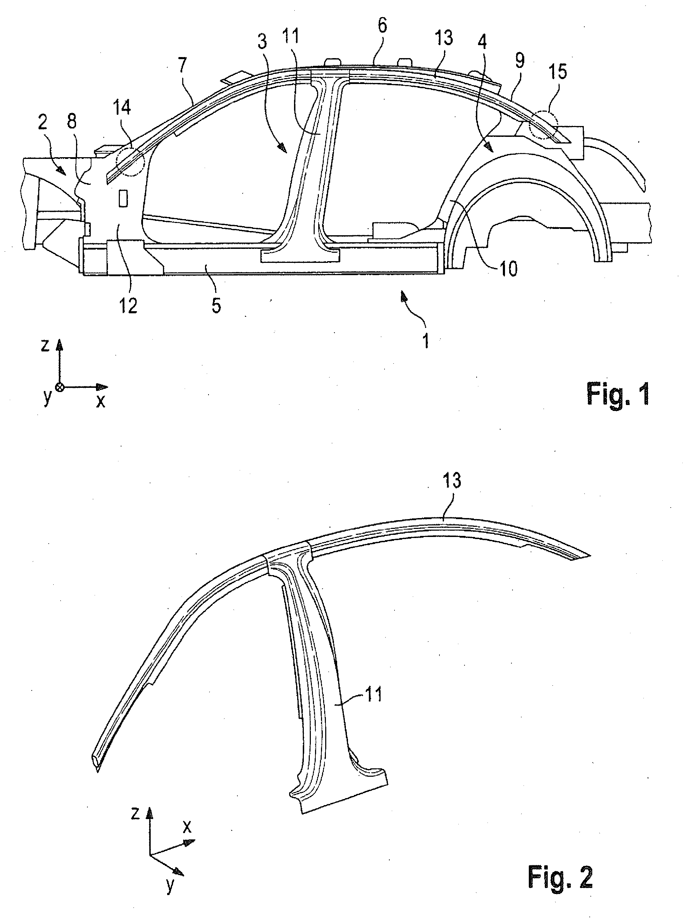

In Fig. 1 ist eine Seitenansicht einer teilweise komplettierten Karosserie eines Personenkraftfahrzeugs der Limousinen-Bauart gezeigt. Die dargestellte Karosserie umfasst eine Blechinnenschale 1 einer Seitenwand. Die Seitenwand besteht in Schalenbauweise aus der dargestellten Blechinnenschale 1 und einer in Fig. 1 nicht gezeigten Blechaußenschale. Diese wird in einem späteren Fügeschritt von der Seite von außen an der Karosserie angebracht. Die Seitenwand umfasst zumindest eine A-Säule 2, eine B-Säule 3, eine C-Säule 4, einen Seitenschweller 5 und einen Dachseitenrahmen 6. Der Dachseitenrahmen 6 bildet die seitliche Begrenzung eines Fahrzeugdachs.

Die A-Säule 2 besteht aus einem oberen Abschnitt 7 und einem unteren Abschnitt 8. Der obere Abschnitt 7 verläuft in Verlängerung des Dachseitenrahmens 6 in Fahrzeuglängsrichtung x nach vorne und in Fahrzeughöhenrichtung z nach unten seitlich entlang einer Frontscheibe bis zu einem unteren Querträger, der in Fahrzeugquerrichtung y die beiden A-Säulen 2 miteinander verbindet, und an dem der untere Randbereich der Frontscheibe angebracht ist. Der untere Abschnitt 8 verläuft vom unteren Querträger in Fahrzeughöhenrichtung z nach unten bis zum Seitenschweller 5. Er dient unter anderem zur Aufnahme von Scharnieren für eine Seitentür.

Die C-Säule 4 besteht ebenfalls aus einem oberen Abschnitt 9 und einem unteren Abschnitt 10. Der obere Abschnitt 9 verläuft in Verlängerung des Dachseitenrahmens 6 in Fahrzeuglängsrichtung x nach hinten und in Fahrzeughöhenrichtung z nach unten seitlich entlang einer Heckscheibe bis zu einem unteren Querträger, der in Fahrzeugquerrichtung y die beiden C-Säulen 2 miteinander verbindet, und an dem der untere Randbereich der Heckscheibe angebracht ist. Der untere Abschnitt 10 verläuft vom unteren Querträger in Fahrzeughöhenrichtung z nach unten um ein Radhaus herum bis zum Seitenschweller 5.

Einzelne Bereiche der Seitenwand sind höheren Belastungen ausgesetzt als andere Bereiche. Um nun die Blechdicken der Blechinnenschale 1 und der Blechaußenschale nicht nach den höchstbelasteten Bereichen auswählen zu müssen, sind die höher belasteten Bereiche lokal verstärkt. Dazu ist in der B-Säule 3 in dem Hohlraum zwischen der Blechinnenschale 1 und der Blechaußenschale ein Verstärkungsblech 11 angeordnet, dass sich über die gesamte Höhe der B-Säule 3 zwischen dem Seitenschweller 5 und dem Dachseitenrahmen 6 erstreckt. Dieses Verstärkungsblech 11 aus einem höherfesten Stahl verstärkt die B-Säule 3. Auch der untere Abschnitt 8 der A-Säule 2 ist mit einem flächigen Gussbauteil 12 verstärkt, das in dem Hohlraum zwischen der Blechinnenschale 1 und der Blechaußenschale angeordnet ist.

Ein weiterer Bereich der Seitenwand, der hohen Beanspruchungen standhalten muss, ist der Dachseitenrahmen 6 sowie der obere Abschnitt 7 der A-Säule 2 und der obere Abschnitt 9 der C-Säule 4. Dieser Bereich muss besonders steif sein, um bei einem Überschlag des Personenkraftfahrzeugs sicherzustellen, dass das Fahrzeugdach nicht in großem Maße eingedrückt werden kann. Deshalb verläuft durch den oberen Abschnitt 7 der A-Säule 2, den gesamten Dachseitenrahmen 6 und den oberen Abschnitt 9 der C-Säule 4 ein durchgehendes Rohr 13 aus einem Kohlefaser-verstärkten Kunststoff. Das Rohr 13 ist - wie auch die anderen Verstärkungsbauteile - in dem Hohlraum zwischen der Blechinnenschale 1 und der Blechaußenschale der Seitenwand angeordnet.

Das Rohr 13 besteht aus geflochtenen Kohlefasern, die in einem Harz eingebettet sind. Aufgrund der Verwendung eines solchen Flechtprofils und der Wahl eines rohrförmigen Querschnitts weist das Rohr 13 eine außerordentlich hohe Steifigkeit auf. Es verstärkt somit in hohem Maße den oberen Abschnitt 7 der A-Säule 2, den Dachseitenrahmen 6 und den oberen Abschnitt 9 der C-Säule 4. Zugleich weist es bezogen auf seine Steifigkeit aufgrund des Einsatzes eines Flechtprofils aus einem Kohlefaser-verstärkten Kunststoffes ein außerordentlich geringes Gewicht auf. Das damit einhergehende geringe Gewicht der Karosserie des Personenkraftfahrzeugs ist sowohl für den Kraftstoffverbrauch als auch für die Fahrdynamik von großer Bedeutung.

Das Rohr 13 ist mit dem oberen Randbereich des Verstärkungsblechs 11 der B-Säule 3 verklebt und vernietet. Zudem ist es mit seinem vorderen Endabschnitt mit dem unteren Ende des oberen Abschnitts 7 der A-Säule 2 an einer Klebestelle 14 und mit seinem hinteren Endabschnitt mit dem unteren Ende des oberen Abschnitts 9 der C-Säule 4 an einer Klebestelle 15 jeweils umlaufend sowohl mit der Blechinnenschale 1 als auch mit der Blechaußenschale verklebt.

Das Rohr 13 aus dem Kohlefaser-verstärkten Kunststoff weist einen deutlich geringeren Wärmeausdehnungskoeffizienten auf als die Blechinnenschale 1 und die Blechaußenschale. Bei der Verbindung des Rohres 13 mit der Blechinnenschale 1 und der Blechaußenschale muss dies berücksichtigt werden. Deshalb ist das Rohr 13 ausschließlich mit dem Verstärkungsblech 11 der B-Säule 3 und lokal an den Klebestellen 14 und 15 mit der A-Säule 2 und mit der C-Säule 4 verbunden. Bei Temperaturschwankungen kann der Klebstoff die unterschiedliche Wärmeausdehnung durch eine elastische Verformung an den Klebestellen 14 und 15 ausgleichen, sodass es zu keiner unerwünschten Deformation der Karosserie kommt.

Im Alltag muss das Rohr 13 so die unterschiedlichen Längenänderungen zwischen minimal -40°C und maximal 90°C ausgleichen können. Allerdings herrschen beim Lackieren der Rohkarosserie Temperaturen von teilweise über 140°C, die die Karosserie in Mischbauweise mit dem Rohr 13 aus dem Kohlefaser-verstärkten Kunststoff auch aushalten können muss. Damit dies möglich ist, werden die beiden Klebestellen 14 und 15 erst nach dem Lackieren hergestellt. Das entsprechende Verfahren dazu schaut folgendermaßen aus:

Zunächst wird das Verstärkungsblech 11 der B-Säule 3 mit dem Rohr 13 zu einer Vormontagegruppe miteinander verbunden, wie sie in Fig. 2 gezeigt ist. Auf das Rohr 13 ist dabei jeweils beidseitig der späteren Klebestellen 14 und 15 umlaufend eine Schicht Blähschaum aufgebracht. Diese Vormontagegruppe wird an die Karosserie gefügt, an der bereits die Blechinnenschale 1 der Seitenwand angebracht ist. Die Dicke der Blähschaumschichten ist dabei so gewählt, dass der Blähschaum das Fügen nicht behindert und den Mediendurchfluss beispielsweise während einer kataphoretischen Tauchlackierung gewährleistet. Auch das flächige Gussbauteil 12 wird gefügt. Anschließend wird die Blechaußenschale angebracht. Damit befindet sich das Rohr 13 im Hohlraum zwischen der Blechinnenschale 1 und der Blechaußenschale. In seiner Position gehalten wird es ausschließlich durch das Verstärkungsblech 11. Diese Karosserie wird nun so lackiert. Da das Rohr 13 nur mittig am Verstärkungsblech 11 befestigt ist, kommt es zu keinen Problemen mit den unterschiedlichen Wärmeausdehnungen. Durch die Temperaturen während des Lackierens bzw. während des anschließenden Trocknens des Lackes expandiert der Blähschaum, sodass er beidseitig der späteren Klebestellen 14 und 15 jeweils eine Art Schottwand in dem Hohlraum zwischen der Blechinnenschale 1 und der Blechaußenschale gebildet wird. Der Blähschaum ist aber nicht so fest, dass er die unterschiedlichen Wärmeausdehnungen ernsthaft behindert. Nach dem Abkühlen wird nun durch eine Ausnehmung in der Blechinnenschale 1 an den Klebestellen 14 und 15 der Klebstoff eingebracht. Der aufgeblähte Blähschaum beidseitig der Klebestellen 14 und 15 verhindert dabei, dass der Klebstoff sich über die Klebestellen 14 und 15 hinaus in dem Hohlraum zwischen der Blechinnenschale 1 und der Blechaußenschale verteilt.

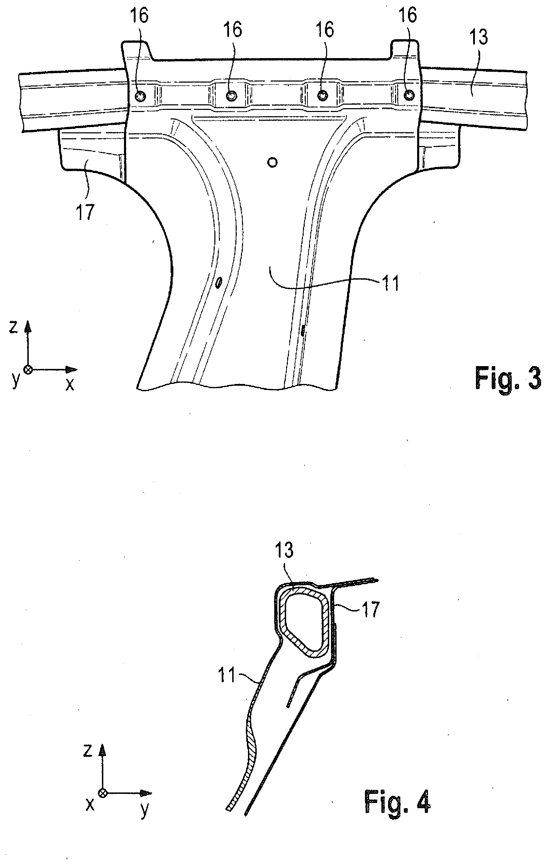

Dieses Verfahren erfordert eine präzise Verbindung zwischen dem Verstärkungsblech 11 und dem Rohr 13. Diese Verbindung ist in Fig. 3 in einer vergrößerten Seitenansicht und in Fig. 4 in einem Schnitt detailliert gezeigt. Das Verstärkungsblech 11 verbreitert sich im Bereich der Anbindung des Rohres 13. Mit diesem verbreiterten Bereich wird das Verstärkungsblech 11 mit dem Rohr 13 verklebt. Zusätzlich wird das Verstärkungsblech 11 mit dem Rohr 13 über mehrere Niete 16 verbunden. Die Niete 16 stellen eine sichere Verbindung sicher bis der Klebstoff ausgehärtet ist. Auf diese Weise kann die Vormontagegruppe bereits an die Karosserie gefügt werden, auch wenn der Klebstoff noch nicht die Festigkeit der Verbindung gewährleisten kann. Zusätzlich wird an das Verstärkungsblech 11 oberhalb und unterhalb des Rohres 13 ein Haltblech 17 angeschweißt, sodass das Rohr 13 umlaufend vom Verstärkungsblech 11 und vom Halteblech 17 umgeben ist. Damit ist das Rohr 13 zusätzlich in eine konventionelle Blechstruktur formschlüssig eingebettet. Zusammen mit der Verklebung ergibt sich somit eine sehr steife Anbindung.

## Patentansprüche

1. Verfahren zum Herstellen der Kraftfahrzeugkarosserie mit einer Seitenwand, die in Schalenbauweise gebildet wird von einer Blechinnenschale (1) und einer Blechaußenschale, wobei die Seitenwand zugleich einen Dachseitenrahmen (6) bildet, der mit einer B-Säule (3) der Kraftfahrzeugkarosserie verbunden ist, wobei in dem Hohlraum zwischen der Blechinnenschale (1) und der Blechaußenschale im Bereich des Dachseitenrahmens (6) zur Verstärkung ein Rohr (13) aus einem faserverstärkten Kunststoff angeordnet ist, wobei das Rohr (13) mit einem Verstärkungsblech (11) der B-Säule (3) verbunden ist, das sich über die gesamte Höhe der B-Säule (3) erstreckt, wobei das Rohr (13) mit dem Verstärkungsblech (11) der B-Säule (3) und mit der A-Säule (2) und der C-Säule (4) verklebt ist, bestehend aus zumindest den folgenden Schritten:
• Anbringen der Blechinnenschale (1) an der Karosserie,
• Verbinden des Verstärkungsblechs (11) der B-Säule (3) mit dem Rohr (13) zu einer Vormontagegruppe,
• Anbringen der Vormontagegruppe an der Karosserie,
• Anbringen der Blechaußenschale,
• Lackieren der Karosserie,
• Verkleben des Rohrs (13) mit der A-Säule (2) und der C-Säule (4).

2. Verfahren nach Anspruch 1, **dadurch gekennzeichnet, dass** vor dem Lackieren der Karosserie auf das Rohr (13) beidseitig der beiden späteren Klebestellen mit der A-Säule (2) und der C-Säule (4) ringförmig jeweils etwas Blähschaum aufgebracht wird, der sich beim Lackieren radial bis zur A-Säule (2) bzw. C-Säule (4) aufbläht.

## Claims

1. A method for producing a motor vehicle body comprising a side panel, which is formed in a monocoque construction by an inner sheet metal shell (1) and an outer sheet metal shell, wherein the side panel also forms a lateral roof frame (6), which is connected to a B pillar (3) of the motor vehicle body, wherein a tube (13) made of a fibre-reinforced plastics material is arranged in the cavity between the inner sheet metal shell (1) and the outer sheet metal shell in the region of the lateral roof frame (6) for reinforcement, wherein the tube (13) is connected to a reinforcing plate (11) of the B pillar (3), which plate extends over the entire height of the B pillar (3), wherein the tube (13) is bonded to the reinforcing plate (11) of the B pillar (3) and to the A pillar (2) and the C pillar (4), said method comprising at least the following steps:
• attaching the inner sheet metal shell (1) to the body,
• connecting the reinforcing plate (11) of the B pillar (3) to the tube (13) to form a sub-assembly,
• attaching the sub-assembly to the body,
• attaching the outer sheet metal shell,
• painting the body,
• bonding the tube (13) to the A pillar (2) and the C pillar (4).

2. A method according to claim 1, **characterised in that**, before the body is painted, expanding foam is applied to the tube (13) in a ring shape on each side of the two points which will later be bonded to the A pillar (2) and the C pillar (4), which foam expands radially as far as the A pillar (2) and the C pillar (4) during painting.

## Revendications

1. Procédé de fabrication d'une carrosserie de véhicule automobile comportant une paroi latérale en construction par coque, formée d'une coque intérieure en tôle (1) et d'une coque extérieure en tôle,
• la paroi latérale formant en même temps un cadre latéral de toit (6) relié à la colonne B (3) de la carrosserie du véhicule,
- un tube (13) en une matière plastique renforcée par des fibres étant installé dans le volume libre entre la coque intérieure en tôle (1) et la coque extérieure en tôle dans la région du cadre latéral du toit (6) pour le renforcement,
- le tube (13) étant relié à la colonne B (3) par une tôle de renforcement (11) qui s'étend sur toute la hauteur de la colonne B (3),
- le tube (13) étant collé à la tôle de renforcement (11) de la colonne B (3), à la colonne A (2) ainsi qu'à la colonne C (4),
procédé comprenant au moins les étapes suivantes consistant à :
• installer la coque intérieure en tôle (1) sur la carrosserie,
• relier la tôle de renforcement (11) de la colonne B (3) au tube (13) pour former un ensemble préassemblé,
• installer le groupe préassemblé sur la carrosserie,
• installer la coque extérieure de tôle,
• mettre la carrosserie en peinture,
• coller le tube (13) à la colonne A (2) et à la colonne C (4).

2. Procédé selon la revendication 1,
**caractérisé en ce que**
avant de mettre en peinture la carrosserie, on applique de façon périphérique, sur le tube (13) des deux côtés des deux futurs points de collage à la colonne A (2) et la colonne C (4), une mousse expansible, qui lors de la mise en peinture, gonfle radialement jusqu'à la colonne A (2) et la colonne C (4).
